# EUROPEAN PATENT SPECIFICATION

(11) **EP 2 031 824 B1**
(45) Date of publication and mention of the grant of the patent: **10.01.2018**
(21) Application number: 08161087.5
(22) Date of filing: 24.07.2008
(51) Int. Cl.: H04L 29/08, H04N 21/61, H04L 29/14

(54) **Proxy video server for video surveillance**
Proxy-Videoserver zur Videoüberwachung
Serveur proxy vidéo pour surveillance vidéo

(30) Priority: 24.07.2007 US 782439
(43) Date of publication of application: 04.03.2009
(73) Proprietor: Honeywell International Inc., Morris Plains, NJ 07950 (US)
(72) Inventor: Cohen, Isaac, Minnetonka 55345 (US); Wilson, Jeremy, Delta British Columbia V4E 2M3 (CA)
(74) Representative: Houghton, Mark Phillip

(56) References cited:
- WO-A-99/59072
- WO-A-2007/002763
- GB-A- 2 389 937
- US-A1- 2003 062 997
- US-A1- 2006 244 839
- US-B1- 6 698 021

## Description

The present invention relates to video surveillance systems. More particularly, the present invention relates to a proxy video server with on-board video analytics ability, and to a video surveillance system that includes one or more of the proxy video servers to provide enhanced video management functions in a transparent and scalable manner. The novel proxy video server manages and proxies each video source within a video network to virtualize the source so that it will appear to a video client as a "smart" video source with enhanced capabilities. Such virtualization function virtually hides from the video client the complexities of the distribution of storage and processing capabilities within the video surveillance network as well as the diversity of protocols presented by the video sources. The novel proxy video server is particularly advantageous for distributed systems with many video sources.

Video surveillance systems are known for use in a variety of applications for monitoring objects, e.g., a piece of baggage or a person, within an environment under video surveillance. Analog closed circuit television (CCTV) monitoring systems have been in operation for many years. These legacy analog-based CCTV systems, and more recently available network-based video surveillance systems are employed to monitor and/or track individuals, vehicles entering or leaving a building facility, or security gate, individuals present within a store, office building, hospital, etc., or other such setting where the health and/or safety of the occupants may be of concern. In the aviation industry, video surveillance systems are used to monitor the presence of individuals at key locations within an airport, such as at a security gate or parking garage. CCTV has traditionally been recorded to videocassette recorders (VCRs) and displayed on analog video monitors. But as a result of the improvements in computer and network technology, the video surveillance industry is transitioning from legacy analog systems to systems that are a hybrid of analog and digital components, or that are composed entirely of digital components and networks for the transmission, storage, display, and analysis of surveillance data.

The representation of video and audio surveillance data in digital form has opened up new opportunities for computer aided automatic enhancement and interpretation of the surveillance data. Image enhancement operations are aimed at improving picture quality including reducing image noise, improving the sharpness of the image, and stabilizing images for cameras subject to vibration. Interpretation operations include detection of moving objects, object tracking, object classification, object behavior analysis as well as detection of the appearance or disappearance of objects of interest in successive video frames. The results of such analysis may be used to minimize data throughput and storage requirements including compressing or discarding the video data if its contents show that there is nothing of interest from a surveillance perspective. On-board video analytics may identify events of a significant nature in the processed video, particularly those detected video events that require immediate attention.

More, such on-board video analytics operation is especially important considering the labor cost and tedium associated with visually monitoring the surveillance video in real time, or manually scanning a stored video recording until a desired event embedded in the video stream is found. Manual scanning to identify and forward relevant video clips directly to an operator results in greatly increased search times. The phrase "video analytics" as used herein shall refer to such automatic enhancement and interpretation of video and audio data. The output of video analytics operations can be enhanced video or audio, or metadata that captures interpretation results. Metadata is structured, encoded data that describes characteristics of information-bearing entities to aid in identification, discovery, assessment and management of the entities. The metadata may describe people, faces, or any other object in the scene, or spatio-temporal properties, such as trajectories of objects or activities and behaviors.

Video analytics provide that such metadata may be transported along with the video in the form of embedded metadata, or may be transported separately in a purely metadata stream. A common means for representing metadata in text form is XML (eXtended Markup Language). A common means for storing and searching metadata is a relational database. Video analytics may make use of metadata derived from lower level video analytics operations. For example, video analytics that perform behavior analysis, such as detecting a person loitering near a doorway, typically operate on the metadata generated by lower level tracking and classification stages of the video analytics, rather than directly on the video images themselves.

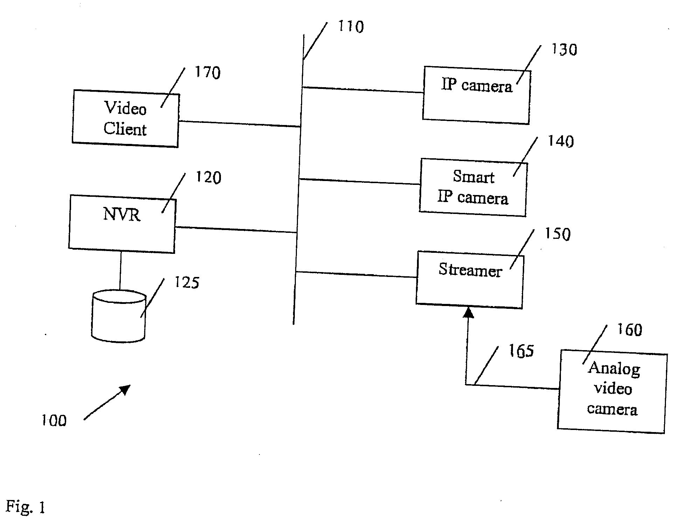

Fig. 1 herein is a schematic block diagram of a typical conventional digital video surveillance data management system 100. Video management system 100 comprises a LAN/WAN structure 110, which connects a network video recorder (NVR) 120, with storage device 125, to a variety of video sources such as IP camera 130, smart IP camera 140, streamer 150 and analog video camera 160, and accessed by local and remote users, e.g., video client 170. Network video recorder or NVR (120) is a common component of such conventional video management systems. NVR 120 manages the video data directed from all of the video and audio sources and provides video management functions including video analytics, video storage, and video display. NVRs may be implemented within a single computer, or in some cases may be implemented in a distributed fashion across multiple computers. This is especially the case for large surveillance installations supporting many video sources, and video clients that use the video data. NVRs may display their video and audio output via analog or digital display means, or act as a video source to another system component or video client.

The phrase "video source" as used herein describes any device providing video and/or audio data for use in a video surveillance network. Video sources include but are not limited to IP cameras 130, smart IP cameras 140, streamers 150, and NVR 135. The data sent by a video source can include representations of video, audio, other sensor inputs such as temperature and vibration, simple binary trigger inputs, contact closure inputs (e.g. a door switch), and video analytics metadata. The phrase "video client" as used herein describes any component of the network that makes use of a video source, and/or its data, for example, an NVR or application software for local or remote video display, which in its simplest form may be a web browser accessing the video source.

In Fig. 1, NVR 120 receives compressed digital video and audio inputs from analog video camera 160 via streamer 150. Conventional on-board video analytics are included within the smart IP camera 140 to process acquired video using the video analytics. Device discovery may be provided by the NVR 120 to identify the different types of video sources comprising the video management system. The separate video sources may operate with different protocols.

Video clients such as user workstation 170 must access the NVR to retrieve stored video. And as mentioned, NVR 120 may apply video analytics to process video data and determine what portions of the analyzed data should be recorded, or to determine whether the captured data includes an event that should be reported as an alarm condition. NVR 120 may also convert digitized video data back to analog form for display, or utilize computer monitors for display, or store the digitized data in storage device 125, or provide access to digital video data for other network devices. For example, the NVR is able to provide remote video clients with access to the live video streams or to the stored video data (e.g., in storage device 125).

The function performed by streamer 150 is to convert analog video to compressed digital form for use in a digital video surveillance system. Such device may also be referred to variously as an encoder or video server. The streamer may take one or multiple analog video inputs, but typically requires only a single physical network connection. A streamer implements the digitization and compression of acquired analog data, and transmits the converted video data in digital form over a computer network using IP protocols, typically built on top of TCP or UDP protocols. A commonly used higher level streaming protocol for video and audio is RTSP (as described in RFC 2326; http://www.ietf.org/rfc/rfc2326.txt). Such devices may also implement additional video analytics functions. Such operation ensures that no analog video or analog audio transmission components are required, apart from the connection from the camera to the streamer.

IP camera 130 is illustrative of another common component of such known digital surveillance systems that integrate the streamer functions on-board a camera to capture, digitize, compress, and provide other video and audio processing functions. In some cases these video sources or cameras have on-board video processing capabilities, e.g., such as smart IP camera 140, to implement additional video analytics functions within the camera.

A further common component of conventional video surveillance systems is the replacement of analog video displays with digital displays ("monitors") that are driven directly from a computer, for example, a user workstation 170. Similarly, analog audio input and output devices may be replaced by devices able to connect directly to the network, such as VOIP (voice over IP) devices. In a surveillance system context, audio output may be used in relation to intercom or audible alerting functions.

Various applications are known that provide for improved management of video surveillance data for video surveillance applications. For example, pending US Patent Application No. 2006/0239645 ("the '645 application"), commonly owned, discloses an enterprise video surveillance system that includes ability to package video sequences derived from network cameras based on user-specified events. In order to manage the video surveillance data, the '645 application discloses the use of a video analytics processing manager, or Digital Video Manager™ ("DVM"). DVM provides for portions of video sequences to be bound into a "package" containing an event. DVM is a scalable, enterprise class IP-based digital video manager system that includes a network video recorder (NVR), and uses software to transform standard IT equipment and component video sources into customized and manageable video systems for security and surveillance needs. The package or packaged event then is transmitted to an external agent for further analysis.

WO-A-2007/002763 discloses a video surveillance system in which a number of video cameras are connected to a network configured to supply alerts and video primitives to user consoles. The system includes both intelligent video cameras having on board content analysis and/or activity interference components which can generate primitives or alerts as well as standard analogue cameras. Analogue cameras are connected to the network via a video management platform which performs digitisation and compression as well as analysis in order to output primitives and alerts to the network.

US-A-2003/0062997 discloses a similar system whereby standard cameras are **connected to a network via a video module for analysing the video** US-B-6698021 discloses a similar distributed system for remotely controlling surveillance video cameras using a camera server at the client side and an intermediate proxy comprising a camera control module providing protocol adaptation and an image capture application providing motion detection.

US-A-2006/0244839 discloses a similar virtualisation system providing common interface adaptation for sharing and combining captured media streams and for supporting motion detection. GB-A-2389937 describes an Internet video surveillance camera system which uses a video server for transferring video images from video sources to video receivers.

WO-A-99/59072 describes a media manager arranged to control autonomous media devices in a network.

One significant difference between analog and digital video is that there are a small number of analog standards in common use, such as NTSC and PAL, while there exists a wide variety of digital video and digital audio compression techniques and standards, such as JPEG, MPEG-2, MPEG-4, H.261, and H.264. A variety of protocols are also available for discovering the video sources available on a network, and for transporting video data. Similarly, there is a wide variety of video analytics capabilities supported by various video sources, ranging from simple motion detection to complex object detection, tracking, and classification. With continuing innovations, this situation is certain to get more complex with time. This poses increasing challenges for developers of video management software and video client software to cope with this increasing diversity of video source capabilities.

In the field of software engineering, the term "normalization" or "normalizing" is used to describe a layer of functionality that presents a uniform interface to a set of services that have similar functionality but diverse methods for interfacing to that functionality. For example, in the field of relational databases, ODBC (Open Database Connectivity) is a standard application programming interface (API) for accessing a wide range of databases from different vendors. ODBC acts as a normalization layer between an application and the database functions it needs, simplifying the implementation of the application software, and making it easy for the application to work with a diversity of database implementations.

In network systems, it is known that certain services or functions may be accessed through a "proxy server." A proxy server is a network device that acts as an intermediary between a client and some network function that it wishes to access. A client connects to the proxy server, and then requests a connection, file, or other resource available on a different server. In the case of files, the proxy server may provide the file either by retrieving it from the specified server or by serving it from a cache. In some cases, the proxy server may alter the client's request or the server's response for various purposes, for example to enforce access policies for restricted services or functions, or to perform protocol conversions to suite the needs of the client or server.

An intercepting proxy is the association of a proxy server with a router. The router ensures that connections made by client applications to services via the router are intercepted by the router and redirected to the proxy, typically without the client being aware of this intermediary. Intercepting proxies are commonly used in businesses to prevent avoidance of usage policies enforced by the proxy, and to ease administrative burden, since no proxy specific configuration of the client application is required.

What would be welcomed, therefore, in the field of digital video surveillance systems is a proxy video server with on-board video analytics functions that can normalize the capabilities of the diverse video sources available on the surveillance network, to present the sources and their operation as virtual sources displaying the same normalized operation. Doing so would enable the video clients to more efficiently access the video sources through the novel proxy video server and "treat" the video sources as if they display enhanced and more uniform functionality than they actually provide. Such a novel and desirable proxy video server should provide an enhanced view of the video sources in a variety of ways, including video device discovery, session protocols, video and audio encoding via transcoding, retrieval of stored video, video analytics functions, and metadata formats. Such proxy video server would minimize the amount of reconfiguration of video clients and video sources that needs to be done in order to introduce the proxy video server into the surveillance system.

Enhancing and normalizing certain functions, in particular such functions as video transcoding and video analytics, can require substantial computing horsepower. When few functions are supported by the video source, the envisioned novel video proxy server should operate to remedy or render transparent to the end video clients such deficiencies. As the number of video sources that are being accessed through a single proxy video server is increased, the problem arises of having adequate computing resources to normalize all these sources. The extent of surveillance services and required functions can also change dynamically during a typical day of operation. For example, a higher level of vigilance via video analytics may be required at nighttime when a facility is at a higher risk of being the target of criminal activity than during the daytime.

Hence, what would be further welcomed in the field of video surveillance is a proxy video server including means to support scalability of the aforementioned proxy video functions. Scalability as used herein refers to an ability to add additional proxy video servers as needed to accommodate the additional computational load required to enhance the capabilities of additional video sources, particularly in such a way that the computational load is automatically distributed across the proxy video servers. A person designing such a surveillance system would then need only to concern him/herself with providing adequate proxy video server computing resources for the worst case loading, and would not have to concern themselves with the distribution of this loading.

As the number of video sources grows large it becomes difficult to accommodate the bandwidth on a single LAN. For example, video surveillance systems at large airports can require over 1000 cameras. The problem arises, therefore, of how to break up the network into smaller subnetworks, while presenting the surveillance system to the user as a unified system. The problem also arises of how to maintain a satisfactory level of system reliability and availability. Traditional NVRs have difficulty scaling in this way, typically requiring a single central server. This central server becomes a performance bottleneck and a single point of failure for the large system. Hence what would be still further welcomed in the field of video surveillance , therefore, is a proxy video server with means to support scalability of video surveillance systems across multiple subnets in such a way that this subnet partitioning is transparent to the video user, and so that video management functionality is distributed across the subnets so that there is no single point of failure for the whole system.

To that end, the present invention provides a novel proxy video server, and a system comprising at least one of the proxy video servers and a method for conducting video surveillance in a system comprising video sources, video clients and at least one of the novel proxy video servers. The novel proxy video server acts as an intermediary between video clients and video sources, enhancing the capabilities of those video sources and simplifying the access to those capabilities.

The novel proxy video server manages and proxies each video source within a video surveillance system or network so that each source is virtualized to appear to a video client as a "smart" video source with enhanced capabilities. The virtualization function hides from a video client the complexities of the distribution of storage and processing capabilities within the surveillance network and also hides the diversity of protocols presented by the video sources. That is, the proxy video server presents a virtualized view of video sources as if they were all of the same types of video sources, where they "appear" to respond to and generate the "same" form of communications and commands.

Examples of the normalizing services or functions implemented by the proxy video server for video surveillance systems include video device discovery protocols, session protocols, video and audio transcoding, surveillance data storage and retrieval, video analytics functions, and metadata formats. Accordingly, the video client does not have to cope with the uneven diversity of functionality, and diversity of protocols, of those video sources. Further, as will be elaborated below, this virtualization is particularly advantageous for large surveillance systems of many video sources organized into multiple subnets.

From the point of view of a video client, the proxy video server makes a video source appear to provide a wider range of image compression options than are directly supported by that video source. For example, the video source might only support JPEG compression. The proxy video server could present a wider list of options such as JPEG, MPEG-2, MPEG-4, and H.264. In the case where the video client requests the use of a compression method not supported directly by the video source, the proxy video server receives the video from the video source and transcodes it to reflect the compression needs or requests by the video client. Such transcoding operation is transparent to the video client. If the video client selects H.264 as the desired compression, the proxy video server transcodes the JPEG images from the video source into H.264 for the video client. In this way, a video client (such as an NVR) may process video data acquired by any or all of the system's video sources as supporting the best compression technology available via the functions provided by the proxy video server.

Further, from the point of view of a video client, the proxy video server makes a conventional video source appear to be a smart video source with video analytics capabilities. Consequently, the video client can receive video analytics metadata in relation to that video source. In this way, a video client such as an NVR, can treat all its video sources as being smart video sources that interpret their surveillance data using video analytics.

Further, as with a typical smart video source, the video analytics functions of the proxy video server may interact with the transmission or transcoding of video source data to filter this data. The filtering includes modifying the video data, discarding the video data, or discarding some portion of the video data, typically for the purpose of discarding video data that is deemed by the video analytics to be uninteresting for surveillance purposes. Such filtering operations help minimize the bandwidth required to communicate the video information to the video client, as well as reducing the processing load on the video client and the storage requirements for the video data.

Further, from the point of view of a video client, the novel proxy video server operation provides for a conventional video source to "appear," for example, to a video client, as if the video source manages its own recording, search, and retrieval of video data. For example, a video client requests that the video source continuously record video at 10 frames per second. The proxy video server acts on this request to provide the recording function from the video source, using for example Network Attached Storage (NAS) to save the video recordings. At a later time when the video client requests retrieval of stored video from a particular video source, the request is received by the proxy video server that manages the surveillance data storage for that particular video source, and responds by fetching the requested stored video from storage on behalf of the video client, or by providing the video client with sufficient information about the location of the stored video to permit the video client to directly retrieve the stored video itself.

In one preferred embodiment, the proxy video server is implemented to operate as an intercepting proxy so that its video source enhancements are provided without the need for any proxy specific configuration of the video clients accessing video sources through a network router between them.

In further embodiments, the novel surveillance system provides automatic load balancing across multiple proxy servers to support readily scalable and robust video surveillance systems without a single point of failure.

In a further embodiment, the novel surveillance system allows video clients to easily work with video sources organized into multiple subnets, supporting scalability to large numbers of video sources that are more readily accommodated on multiple subnets. The invention is defined by the appended claims, in particular independent apparatus claim 1, independent system claim 12, independent method claim 16, and independent computer program claim 20. Examples of proxy video servers and video surveillance systems in accordance with the present invention will now be described with reference to the accompanying drawings in which:-
Fig. 1 is a block diagram showing a conventional network-based video management system;
Fig. 2A is a schematic representation of the proxy video server of the invention;
Fig. 2B is a schematic block diagram of a novel video monitoring system that includes the novel proxy video server with on-board video analytics for virtualizing the various video sources on the network as smart video sources;
Fig. 3A is a schematic block diagram of another embodiment of a video monitoring system of the invention that includes the proxy video server implemented as an intercepting proxy in association with the router;
Fig. 3B is a sequence diagram of a sequence of messages in video monitoring system 300 of Fig. 3A between a video client and a video source, with the proxy video server as an intermediary to enhance the functions of the video source;
Fig. 4 is a schematic block diagram of yet another embodiment of a video monitoring system of the invention with automatic load balancing between a primary and secondary proxy video server;
Fig. 5 is an embodiment of a video monitoring system of the invention that includes a proxy video server within sub networks of the system to manage video in each sub network with minimal configuration requirements for video clients located in remote networks wishing to access the sub-networks and with no single point of failure; and
Fig. 6 is a flow diagram that describes a method for managing video data flow in a video monitoring system that includes a novel proxy video server of this invention.

The invention includes a proxy video server with on-board video analytics ("proxy video server"). The novel proxy video server is constructed to monitor and process acquired video streams arriving at the proxy video server to support video data management functions, and implement particular user-controlled video analytics to filter received video streams based on extracted video content. The on-board video analytics process the video to augment, or in some cases replace, a continuous stream of still or moving image frames from a particular network video source with "inferred" or extracted metadata. For example, in instances where the on-board video analytics is controlled to analyze an incoming video stream to detect motion therein, the novel proxy video server may operate on the video and prevent the forwarding of subsequently arriving video data from the same video source (or the same stream) unless movement is detected. This has the instant benefit of minimizing amounts of video data being routed, saving network bandwidth for other tasks.

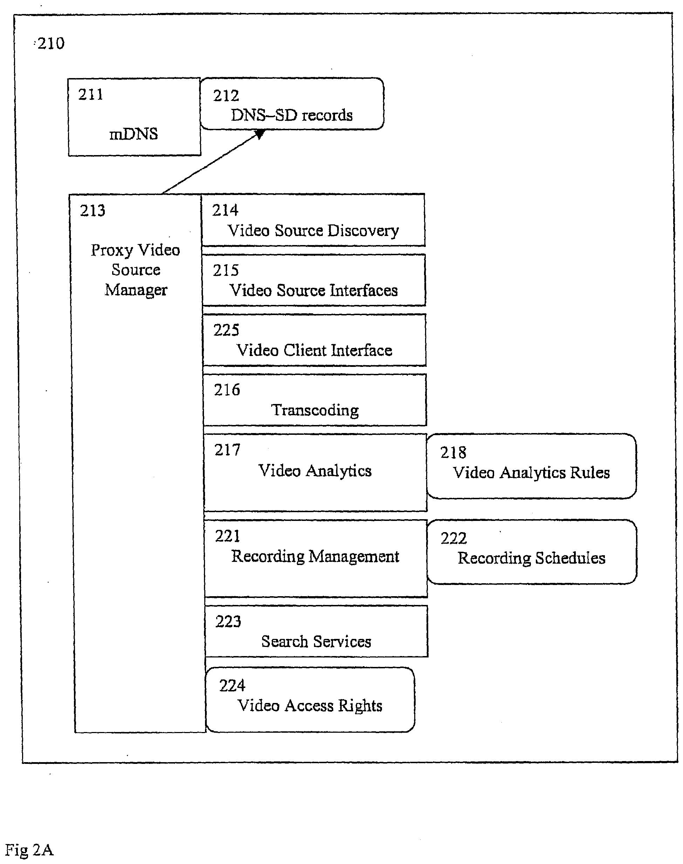

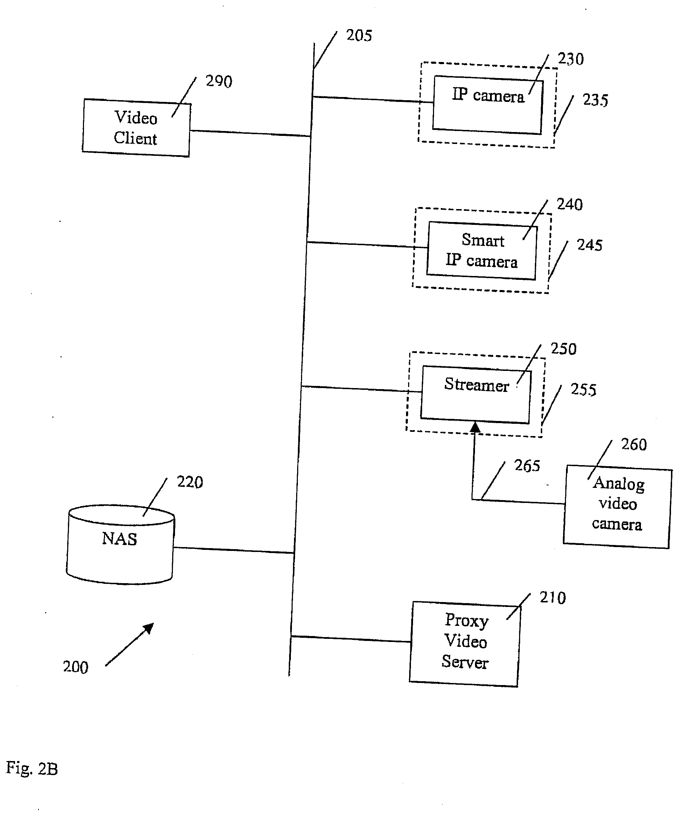

A first embodiment of a novel proxy video server with on-board video analytics of the invention, and of a system in which it is employed will be described with reference to Figs. 2A and 2B. Fig. 2A depicts a novel proxy video server (210), and Fig. 2B depicts a video surveillance system 200 that includes a proxy video server 210. The proxy video server 210 manages video surveillance data, and the interactions between video clients and video sources in system 200.

Video management system 200 is shown in Fig. 2B to comprise LAN 205 connecting novel proxy video server 210 to network attached storage (NAS) 220, and to a basic IP or network camera 230, a smart IP camera 240, and a video streamer 250. Streamer 250 is connected to an analog video camera 260 via analog video cable 265, and compresses the captured analog video for use by the system. The smart IP camera 240 includes on-board video analytics. Video client 290 allows the proxy video server 210 to act as proxy for Basic IP camera 230. That is, the novel proxy video server 210 provides that the video client 290 "sees" basic IP camera 230 represented or virtualized as a smart IP camera, such as smart IP camera 240. Such operation may be described as a virtualization operation or functioning, where the basic IP camera appears virtually to be a smart IP camera. This is indicated in Fig. 2B by the dashed line 235 surrounding basic network camera 230. For that matter, dashed lines 245 and 255 surrounding smart IP camera 240 and video streamer 250, respectively, are used in the figure to indicate that the novel proxy video server "represents" (or virtualizes) the smart IP camera and streamer as devices (video sources) that the video clients would preferably operate with.

Video client 290 may realize a reduced system loading when the video analytics on-board proxy video server 210 is controlled to filter video data normally received directly from IP camera 230, smart IP camera 240 or streamer 250. Operations performed by the novel proxy video server include device discovery. Device discovery is a process by which all system-wide video sources are automatically located on the network, and typically includes determination of the capabilities of each device. The device discovery function of the proxy video server "presents" each actual video source as a virtual video source with a common protocol, which again may be described as one of the features of the novel virtualization performed by the proxy video server 210. Hence, to the video client 290, both IP camera 230 and smart IP camera 240 appear to be of the same type, with the same control functions, and providing similarly formatted video data streams. The transcoding function of the novel proxy video server 210 therefore reduces processing load at the video manager, for example, obviating its need to implement transcoding on incoming video data streams.

From another perspective, the novel proxy video server with on-board video analytics 210 operates to bridge a video source to video client 290. As mentioned, the proxy video server 210 acts as such a video source's proxy, implementing its video analytics and data management functions. The proxy video server 210 essentially provides a normalizing protocol to virtualize the IP camera 230, and provides a number of additional functions including dataflow, session management, and optionally recording of video and metadata.

Where the proxy video server 210 is responsible for providing the recording function for each video source, it does so using its own local storage to save the video recordings, or in a preferred embodiment, using NAS 220 to save the video recordings. At a later time when the video client 290 requests retrieval of stored video from a particular video source, the request is received by the proxy video server 210 that manages the surveillance data storage for that particular video source. In a preferred embodiment proxy video server 210 responds to the request by providing the video client 290 with sufficient information about the location of the stored video on NAS 220 to permit the video client to directly retrieve the stored video itself. This preferred method has the benefit of reducing the loading on network 205 and on proxy video server 210 because in this case the video data is transferred directly from NAS 220 to the video client 290 rather than through the proxy and then onto the video client. It should also be clear to one skilled in the art that it is a straight forward matter in the case of the network system of Fig. 2B (and in the subsequent network figures), to add additional NAS components to the network as needed to meet requirements for additional storage or to manage bandwidth to and from the storage devices.

Proxy video server 210 is shown in a preferred embodiment in Fig. 2A to comprise a multicast Domain Name Service (mDNS) or functional module 211 and a Proxy Video Source Manager 213, along with an associated set of functions or modules that support it. mDNS, as described in http://files.multicastdns.org/draft-cheshire-dnsext-multicastdns.txt, is a key component of Zero Configuration service discovery methods, in which services or functions available within a network can be easily discovered by potential clients of those functions. A common alternative is for such information to be manually configured by the user of the system, thus automatic service discovery is not essential but preferred for simplified operation, especially in large surveillance networks in which manual configuration becomes a significant administrative burden.

The mDNS 211 is used by a video client to determine the list of proxy video sources available, said list of video sources being defined in the set of DNS Service Discovery records (DNS-SD) 212 associated with mDNS 211. DNS-SD, as detailed in http://files.dns-sd.org/draft-cheshire-dnsext-dns-sd.txt, is a convention for naming and structuring DNS resource records in support of service discovery on a network. Each specific type of service or function has its own protocol name, as defined in

### http://www.dns-sd.org/ServiceTypes.html.

In order to discover video sources managed through any proxy video server on the network, a video client emits a request on the mDNS multicast address (224.0.0.251:5353) for any services supporting the proxy video server protocol. mDNS 211 detects this request and responds with the list of video sources that it is currently acting as the proxy for. This "Zero Configuration" approach is advantageous to the video client because it does not need to know in advance the IP address of the proxy video server in order to discover the available video sources for which the proxy video server is acting as proxy. Further, the approach supports the presence of multiple proxy video servers on the same network without any change to the video client because irrespective of whether there is one or several proxy video servers, the video client will obtain a list of all video sources available.

Proxy Video Source Manager 211 has associated with it a Video Source Discovery function 214, which keeps the set of DNS-SD records 212 up to date with the list of video sources for which Proxy video server 210 is acting as the proxy. The Video Source Discovery 214 itself utilizes various forms of device discovery including the above mentioned Zero Configuration approach. For example, to discover what video sources are on the local network that support the video protocols of Axis Communications Inc., Video Source Discovery 214 would periodically emit a request on the local network for any devices that support the "axis-video" service type, as defined in http://www.dns-sd.org/ServiceTypes.html.

Similarly, to discover what video sources are on the local network that support the video protocols of Honeywell International Inc., Video Source Discovery 214 would periodically emit a request on the local network for any devices that support the "honeywell-vid" service or function type, again as defined in http://www.dns-sd.org/ServiceTypes.html. For any video sources on the network that do not support such device discovery, the DNS-SD Records 212 are entered manually through the user interface of the Proxy Video Source Manager 213. For each video source listed in DNS-SD Records 212, whether determined automatically or configured manually, the Proxy Video Manager provides an IP address and port on which the proxy video function is being provided for that video source.

The IP address is the address of the proxy video server 210, or the IP address of another proxy video server delegated with the responsibility of managing that video source. This approach is therefore advantageous for the video clients which need only deal with a single video source discovery protocol, that of the proxy video server, rather than the potentially multiple discovery methods of the actual video sources themselves. Further, the novel proxy video server functions as an advanced device proxy for simpler video sources, presenting the simpler video sources to the end user as having more advanced function abilities. For example, a basic IP camera without motion detection functionality could be presented by the proxy video server (in the response to device discovery) as an enhanced type of source/device that supports motion detection. The device discovery response (by the proxy video server to the video client) optionally includes an indication of the actual video source/device type and its properties, which properties may be of interest for the video client to know.

Proxy Video Manager 213 has associated with it additional functions that support the virtualization of the video sources. The Video Source Interfaces module 215 implements all the video source protocols supported by the proxy video server 210. Where applicable, this includes support of PTZ (pan tilt zoom) control protocols. In a preferred embodiment, each type of video source has an associated plug-in software module conforming to a plug-in interface of the Video Source Interfaces module 215. The plug-in approach is advantageous for easily updating the proxy video server 210 with support for new video source types.

Video client interface 225 implements the normalized protocol used to interact with video clients on behalf of video sources. Video client interface 225 receives and interprets requests from video clients and passes them to the proxy video source manager 213 for processing, and implements the responses to those requests in the normalized protocol used for sending messages back to video clients.

Transcoding module 216 implements transcoding for all of the video compression formats and metadata formats supported by the proxy video server 210. Again, in a preferred embodiment each format is implemented as a plug-in software module conforming to a plug-in interface of the Transcoding module 216.

Video Analytics module 217 implements all of the video analytics processing supported by the proxy video server 210. Again, in a preferred embodiment each video analytics function is implemented as a plug-in software module conforming to a plug-in interface of the Video Analytics module 217. Associated with the Video Analytics module 217 is a collection of Video Analytics Rules 218, which define the video analytics operations to be applied to each video source. Said rules are optionally configured for any video source by video clients of the Proxy Video Source Manager 213 according to the needs of the video clients. Said rules preferably support the option to eliminate frames from the video stream that do not contain objects or events of interest, thus reducing requirements for stored video and for bandwidth required to transmit video to video clients. Similarly, said rules preferably support the ability to initiate video recording or change recording parameters in order to better capture objects or events of interest.

Recording Manager module 221 implements all of the recording functions supported by the proxy video server 210, including recording of video and associated metadata. Associated with Recording Manager module 221 is a collection of Recording Schedules 222. Said schedules are optionally configured for each video source by video clients of the Proxy Video Source Manager 213 according to the needs of the video clients. Search Services function 223 implements operations for searching on the video and metadata recordings. The recording and search service functions of proxy video server 210 allow it, where desirable, to replace the functions of a conventional NVR. Alternatively, and as illustrated in Fig. 2B, the proxy video server 210 may instead act only to provide enhanced video source capabilities to a conventional NVR acting as a video client, such as video client 290. Finally, a collection of Video Access Rights 224 associated with Proxy Video Source Manager 213 defines the access rights for the users of video clients wishing to use the video sources served by the proxy video server 210. For example, a facility administrator may be allowed the ability to view and configure the settings for all video sources, while security staff may only be permitted viewing rights.

### TRANSCODING AND DATAFLOW MANAGEMENT:

With respect to transcoding, video from any of the video sources comprising monitoring system 100 is normally streamed directly from the video sources to, for example, the NVR 120. Such streaming is usually accomplished using standard video compression formats e.g., IP camera 130 may stream JPEG video while smart IP camera 140 may stream the more efficient MPEG-4 format video. However, in the case of the novel video management system 200, transcoding capabilities available on-board the novel proxy video server 210 enable automatic translation of the video source streams into uniform and bandwidth efficient compression formats (e.g., MPEG-4; H.264). That is, the transcoding "translates" the video data to a normalized form, essentially bridging data from disparate or non-standardized proprietary video sources for presentation at an intended destination, e.g., video client 290. A second type of transcoding implemented by the on-board video analytics relates to metadata, which may be represented in non-video data formats such as extensible markup language (XML). The novel metadata transcoding ability supports automatic conversion of the various metadata generated by different video sources of IP cameras (with on-board capabilities) into a common, or normalized metadata representation.

The novel proxy video server 210 applies its video analytics functions to the various types of video data streams based on rules configured for each stream. The reader and the skilled artisan alike should recognize that the analytics-based filtering requires substantially different data processing and flow control than required for meta-data streams. The inventive proxy video server makes use of its video analytics to infer or generate metadata representative of video content, which may be forwarded in place of an actual video data stream to its intended destination (e.g., to a network video manager).

That is, the on-board analysis of video input to the proxy video server may extract meaningful information from raw or encoded video data streams, and filter the data based on the extracted meaningful information. Meaningful information is used broadly herein to include without limitation: moving regions within a scene, people, faces, tracking scenes, tracking faces in a streaming scene, tracking people in time in order to recognize behaviors of interest, etc., including metadata. For example, where incoming video streams correspond to uninteresting or unnecessary information, in accordance with the rules applied, the video may be discarded. While the "uninteresting" acquired video is discarded, metadata indicating same may nevertheless be forwarded to the network's video manager so it (system) knows that the stream is being monitored at the proxy video server.

Only if an event of interest is detected in the video stream will the streaming video then again be forwarded. For example, in a case where a network camera is monitoring a surveillance position to determine if an object in a field of view (FOV) is moved, the video system monitor or viewer need not see the video of the object continuously in live video. It would suffice if the system received information, such as a stream of metadata in lieu of the acquired video, by which it could ascertain that the object is being monitored, and that there has been no object movement. This obviates any need to directly analyze the image data, and store the image data.

The novel proxy video server is not limited to aforementioned processes or functions, but may provide other functions such as detecting network camera properties, including whether a camera has been tampered with (e.g. camera sabotage detection), correcting for camera vibration (video stabilization), detection and tracking of objects, and activity recognition.

### PROXY VIDEO SERVER AS AN INTERCEPTING PROXY:

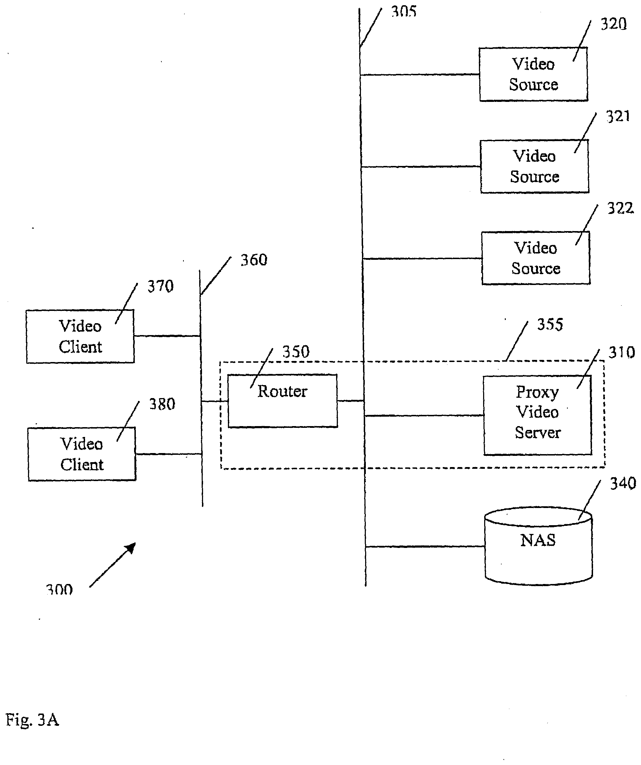

Fig. 3A is a schematic block diagram depicting another embodiment of a video monitoring system 300 of the invention. Video monitoring system 300 includes a novel proxy video server with video analytics 310, a plurality of video sources (e.g., network cameras 320, 321, 322), a router 350 and a NAS database 340. These system components are interconnected by a LAN 305. In the embodiment shown, the proxy video server 310 acts as the network video manager, for example, taking the place and obviating a need for a conventional NVR (such as NVR 120 of Fig. 1). Router 350 is connected through a network structure 360 to first and second video clients 370, 380. Router 350 is configured to pass mDNS service discovery queries from network 360 to network 305, so that video clients 370, 380 can determine the video sources on network 305 managed by proxy video server 310. Router 350 may also be configured to prevent service discovery queries other than those for the functions provided by proxy video server 310, in order to enforce the role of the proxy video server 310 as an intermediary between video clients and video sources. In this case, proxy video server 310 acts effectively as an intercepting proxy on behalf of the video sources, advantageously enforcing the access rights for these video sources, and advantageously requiring no foreknowledge of the IP address of the proxy video server 310.

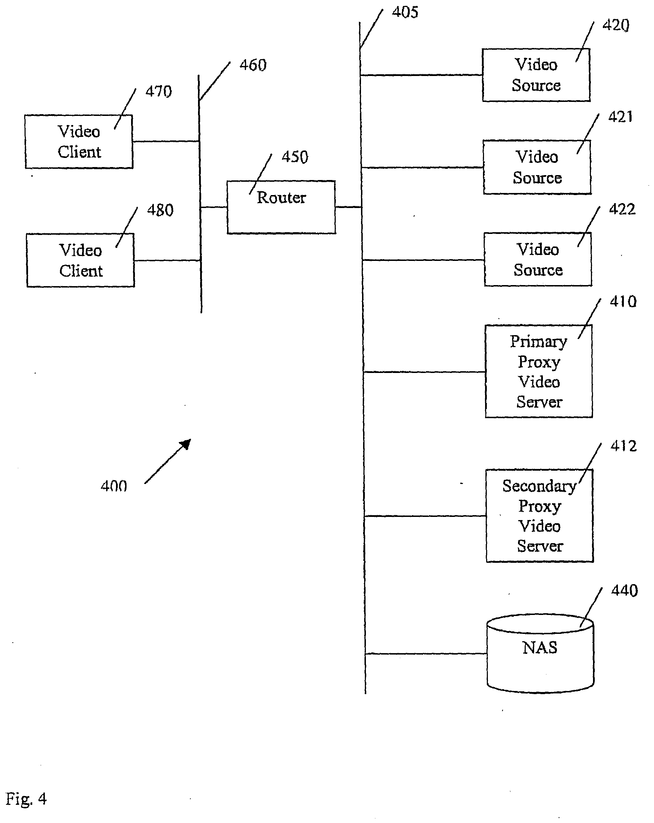

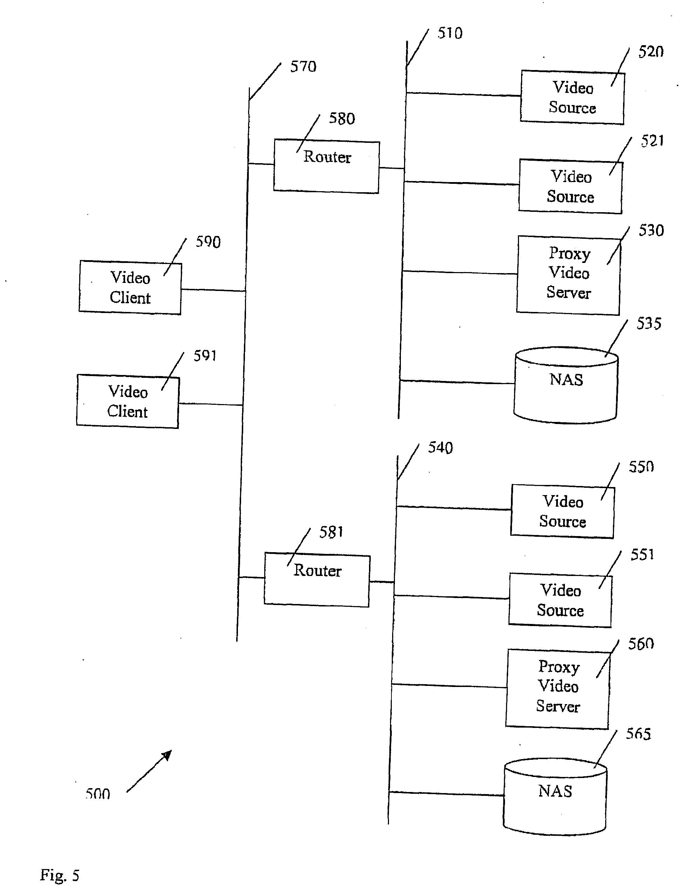

In a preferred embodiment, router 350 and proxy video server 310 are physically integrated into a single unit, as indicated in Fig. 3A by dashed lines 355 surrounding router 350 and proxy video server 310. This advantageous embodiment enables a user to establish a video system by simply plugging in video sources and NAS as required to the integrated system 355, with the assurance that access to the video sources and storage is controlled by the router 350 and proxy video server 310, and with the ready ability to scale up to a larger system with multiple subnets and multiple proxy video servers as will be described further in relation to Fig. 4 and Fig. 5.

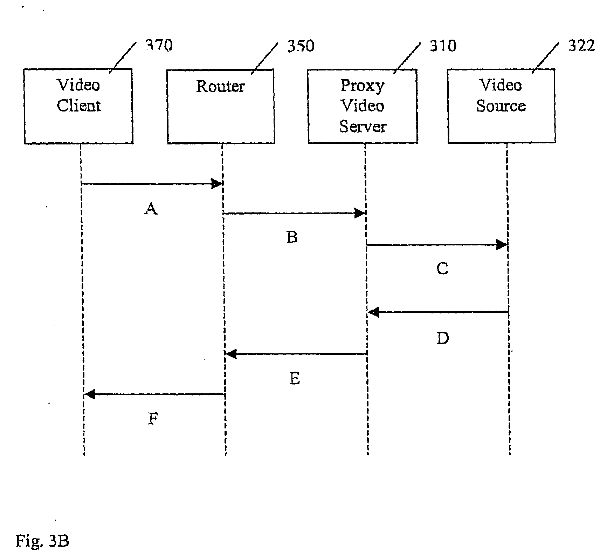

Fig. 3B is a sequence diagram of an operation carried out by the proxy video server 310 within video monitoring system 300 shown in Fig. 3A. One point to be gleaned from Fig. 3B is that the novel proxy video server acts as an intermediary, where it communicates to any video client using one virtualized protocol, and communicates to any supported video source with the appropriate protocol for that source. For example, where video client 370 wishes to request an image or other video data, or a next image in a particular video format, it sends its request to the IP address of the proxy video server as determined through earlier service discovery in relation to the video source of interest. Because this IP address is on subnet 305, it is automatically directed to router 350, as depicted in Fig. 3B (arrow A).

The router 350 in turn routes this request directly to proxy video server 310, as represented by arrow B. The proxy video server analyzes and interprets the video client (370) request, and in the instant case, determines that the request should be directed to video source 322. This request is first translated by proxy video server 310 into the protocol used by video source 322. Arrow C indicates the transfer of the request in the translated format to source 322. Arrow D represents a communication (response to the request) passed from source 322 back to the proxy video server. The proxy video server analyzes the response from source 322, and modifies it to the protocol required by the video client, and sends it to the IP address of video client 370. Again, as the IP address of video client 370 is found to be on subnet 360, the message is send to router 350 (arrow E). Finally, router 350 forwards the message to video client 370 (arrow F).

### AUTOMATIC LOAD BALANCING:

Fig. 4 depicts another embodiment of a video management system 400 of the invention, which includes a novel proxy video server with on-board video analytics 410. While similar to the Fig. 3A embodiment, video monitoring system 400 includes a primary proxy video server 410, a secondary video proxy server 412, interconnected by a LAN 405 to a plurality of video sources 420, 421, 422, and configured to share NAS 440 for storage of video source configuration records and video recordings. Router 450 interconnects network LAN 405 and LAN 460. LAN 460 is in turn connected to first and second video clients 470, 480.
As noted earlier, enhancing and normalizing functions of the proxy video server, in particular such functions as video transcoding and video analytics, can require substantial computing horsepower. As the number of video sources that are being accessed through a single proxy video server is increased, the problem arises of having adequate computing resources to normalize all these sources. The extent of surveillance functions required can also change dynamically.

The proxy video server of the present invention is advantageously suited for distributing computational load because video clients are not preconfigured with fixed addresses for the video sources or for the proxy video servers, allowing allocation of resources to be managed dynamically without impacting the operation of the video clients. In the embodiment of Fig. 4, the primary proxy server 410 has the role of managing this distribution of loading. This server is configured to be responsible for video source discovery and owns the configuration records associated with each video source.

In contrast, secondary proxy video server 412 is configured so that its video source discovery function is disabled, and so that its video source configuration records are simply copies of those maintained by primary proxy video server 410. Whenever proxy video server 410 wishes to delegate the processing for a given video source to the secondary proxy video server 412, it informs the secondary proxy video server 412 that it has been delegated the video source, so that it can immediately take over any background activities for that video source such as video recording.

The primary proxy video server 410 also populates the DNS-SD record for that video source with the IP address of the secondary video server 412, instead of its own IP address, along with an available IP port on the secondary video server 412. Video clients discovering the delegated video source are therefore automatically directed to the secondary proxy video server 412, thus offloading the primary proxy video server 410. In this arrangement, the video clients need not even be aware of the distribution of loading, and need not be aware which server is primary and which is secondary. The shared use of NAS 440 is similarly advantageous because any video client can access the stored recordings without dependence on any one proxy video server, in contrast to an approach where the storage system is part of the proxy video server in which case its recordings become inaccessible if it becomes non functional. As can be seen to anyone skilled in the art, additional proxy video servers can readily be accommodated by such an arrangement.

A further advantage of multiple proxy video servers on the same local network is that it provides straightforward fail-over capability in the even that the primary proxy video server 410 fails. To achieve this function, the secondary proxy video server 412 monitors the health of primary proxy video server 410. In the event that secondary proxy video server 412 detects a failure of primary proxy video server 410, it assumes the role of primary server, reactivating its video source discovery function, and populating its DNS-SD records to provide proxy functions for the video sources.

As noted earlier, secondary proxy video server 412 maintains a copy of the video source configuration records, and so can proceed with applying the same functions, video analytics rules, and schedules as before the failure. Any video clients that were connected to the primary proxy video server 410 respond to the unexpected loss of connection by re-issuing their service discovery requests, which are then answered by the secondary proxy video server 412, so that the video clients are able to quickly determine the revised IP address and port to connect to in order to resume function. Upon resumption of operation of the primary proxy video server 410, said server obtains up to date copies of all configuration and DNS-SD records from secondary proxy video server 412, and then informs the secondary that the primary proxy video server 410 is ready to resume its role as primary again. Secondary proxy video server 412 then clears its own DNS-SD records list and allows the primary to handle delegation of functions as it sees fit.

In another embodiment that is in some ways similar to that shown in Fig. 4, multiple proxy video servers exist on the same LAN without any one proxy video server acting as primary, such an arrangement being advantageous in that management of the video sources is not at all centralized, and intrinsically achieves load distribution and recovery in the event of failure of any proxy video server. This particular approach also makes it easy to add additional proxy video servers as required without any reconfiguration of the existing proxy video servers or video clients. In this embodiment, every proxy video server monitors the video sources being managed by every other proxy video server via the mDNS service discovery mechanism, and the delegation of video sources is handled by a decentralized resource allocation process, of which a number are known in the state of the art.

In the event that one of the proxy video servers fails, the remaining proxy video servers will detect that function is no longer offered for the video sources previously served by the failed server. Via the decentralized resource allocation process, the remaining servers will automatically resolve who will take over service for each video source previously served by the failed node. All proxy servers maintain their own current copy of the configuration records for each video source so that they can take over responsibility for any video source when necessary.

Fig. 5 is another embodiment of a video monitoring system of the invention that includes dedicated proxy video servers for each of a plurality of networks, or sub networks, which enables novel system operation, with the advantage that video clients need not be aware of the multiple subnets and the further advantage that large numbers of video sources are more readily accommodated by separating them into separate subnets. Further there is no single point of failure for the system as a whole. That is, Fig. 5 depicts a video monitoring network 500 that allows the source side to be separated into a number of sub-networks defined structurally by LAN 510 and LAN 540. LAN 510 includes video source 520, video source 521, proxy video server 530, and NAS 535. LAN 540 includes video source 550, video source 551, proxy video server 560, and NAS 565. On the client side, each of a plurality of video clients 590 and 591 are connected in LAN structure 570 to first and second routers 580, 581. Each of the routers is configured to pass mDNS service discovery requests (for proxy video functions) from LAN 570 to their respective subnets so that video clients 590 and 591 are able to discover the video sources managed by the proxy video servers 530 and 560.

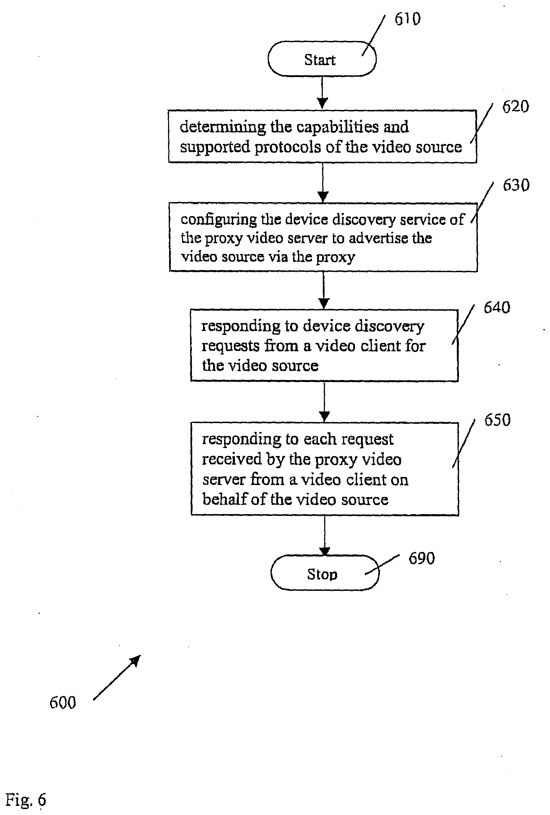

Fig. 6 is a process-flow diagram depicting a novel method 600 of normalizing the functionality of a video source from the point of view of a video client through the actions of a proxy video server. Block (oval) 610 of Fig. 6 represents the start of the novel method, where block 620 represents a step of determining the capabilities and supported protocols of the video source. For example, the step of determining may be implemented by querying the video source device, or by retrieving configuration records for the video source device from a configuration store (not shown in Fig. 6). Block 630 represents a step of configuring the device discovery function of the proxy video server to advertise the video source at the network address of the proxy video server (on an available port at that network address). Block 640 represents a step of responding to device discovery requests from a video client for the video source. The novel method may do so by providing a normalized description of device capabilities and protocols as supported by the proxy video server. Block 650 represents a step of responding to each request directed from a video client to the video source, and received by the proxy video server on behalf of the video source, and block (oval) 690 indicates an end of the method.

For that matter, the step of responding to each request may be further qualified by further determining if the requests can be handled by the video source, and if so, then determining if it is necessary to translate the request into a protocol supported of the intended video source, and if so, carrying out the translation. The step of determining may further include sending the request to the intended video source, and translating the reply into the normalized protocol for the video client. If translation is not determined to be necessary, then the method may implement the request within the proxy video server. Such implementing may include making requests of the intended video source as necessary, storing video data and metadata from the video source to local storage or NAS as necessary, retrieving video data and metadata from local storage or NAS as necessary, processing the responses as necessary to fulfill the request, including augmenting the response with additional processing such as video analytics or transcoding, preparing the reply using the normalized protocol for the video client, and sending the prepared response to the video client.

Implementing the inventive method in its various embodiments realizes improved video management in a video monitoring or surveillance system as described herein. And while a few examples of the inventive proxy video server and the novel system including one or more of the proxy video servers and methods of operation have been shown and described herein, it should be appreciated by those skilled in the art that various changes might be readily made to these embodiments disclosed.

## Claims

1. A proxy video server (210) for managing video surveillance data in a network comprising one or more video sources (230, 240, 250, 260) and one or more video clients (290), the proxy video server comprising:
a proxy video source manager (213) for managing the video sources (230, 240, 250, 260) to appear as virtual smart video sources to video clients (290);
a video client interface (255) for receiving and interpreting requests from video clients (290) and sending responses to video clients (290) on behalf of the video sources (230, 240, 250, 260); **characterized in that** it further comprises a video analytics function (217) for providing video analytics including at least device discovery and motion detection as needed in order to present smart camera capabilities for each video source to any video client;
and one or more video source interfaces (215) for sending requests to a video source using a protocol specific to the video source and for receiving and interpreting responses from a video source using a protocol specific to the video source.

2. The proxy video server as set forth in claim 1, wherein said proxy video source manager (213) includes a video source discovery function (214) to enable the proxy video server (210) to discover video sources (230, 240, 250, 260) for which the proxy video server will operate as their proxy.

3. The proxy video server as set forth in claim 2, wherein the video source discovery function (214) further enables video clients (290) to discover video sources (230, 240, 250, 260) for which the proxy video server will operate as their proxy.

4. The proxy video server as set forth in any of the preceding claims, further comprising a transcoding function (216) to provide transcoding functions to one or more of the video clients.

5. The proxy video server as set forth in any of the preceding claims, wherein the video analytics function (217) includes and implements a set of user configurable video analytics rules (218).

6. The proxy video server as set forth in any of the preceding claims, further comprising a recording management function (221).

7. The proxy video server as set forth in any of the preceding claims, further comprising one or more network attached storage devices for storing video data.

8. The proxy video server as set forth in any of the preceding claims, further comprising a search function (223) for searching stored video, and/or stored metadata for a video client on behalf of a video source.

9. The proxy video server as set forth in any of the preceding claims, further comprising a video access rights function (224), including a set of video access rights for controlling access to data from video sources.

10. The proxy video server as set forth in any of the preceding claims, wherein the proxy video source manager (213) implements a uniform protocol for all video sources irrespective of the actual capabilities and protocols actually supported by said video sources.

11. The proxy video server as set forth in any of the preceding claims, further comprising a router function.

12. A video surveillance system (200), comprising:
one or more video sources (230, 240, 250, 260) for acquiring video surveillance data; and
one or more video clients (290) which may need access to acquired video surveillance data; and **characterised by**:
a proxy video server (210) with on-board video analytics (217) including at least device discovery and motion detection in communication with the one or more video sources (230, 240, 250, 260), and one or more video clients (290) for managing communications and exchanges of the video surveillance data acquired by the video sources;
wherein said managing includes operating with a virtual uniform protocol as seen by the one or more video clients.

13. The video surveillance system as set forth in claim 12, wherein said managing further includes processing to analyze, and filter the video surveillance data by proxy based on video content, metadata content, system processing bandwidth and system load balancing needs.

14. The video surveillance system as set forth in claim 12 or claim 13, further including a second proxy video server, which acts as a secondary or slave proxy video server to the primary proxy video server.

15. The video surveillance system as set forth in any of claims 12 to 14, wherein said managing includes providing transcoding functions.

16. A method for managing video surveillance data within a video surveillance network (200) including normalizing functionality of a video source (230, 240, 250, 260), as apparent to one or more video clients (290) accessing said video source comprising the steps of:
responding to each request directed from a video client (290) to the video source (230, 240, 250, 260), and received by the proxy video server (210) on behalf of the video source; and
determining if the requests can be handled by the video source, and if so, translating the request into a protocol supported by the intended video source, where necessary, including sending the request to the intended video source and translating the reply into the normalized protocol for the video client, and if said translating is not determined to be necessary, implementing the request within the proxy video server including at least device discovery and motion detection.

17. The method as set forth in claim 16, further comprising the steps of:
determining capabilities and supported protocols of the video source (230, 240, 250, 260);
configuring the device discovery function of the proxy video server to advertise the video source at the network address of the proxy video server; and
responding to device discovery requests from a video client for the video source.

18. The method as set forth in claim 16 or claim 17, further including at least one of: storing and receiving video data and metadata from the video source to local storage or NAS as necessary.

19. The method as set forth in claim 18, wherein the storing and receiving both include processing the responses as necessary to fulfill the request, including augmenting the response with additional processing such as video analytics or transcoding.

20. A computer program product, comprising:
tangible storage medium readable by a processing circuit and storing instructions for execution by the processing circuit for performing a method for managing video surveillance data within a video surveillance network including normalizing functionality of a video source (230, 240, 250, 260), as apparent to one or more video clients (290) accessing said video source, comprising the steps of:
responding to each request directed from a video client (290) to the video source, and received by the proxy video server (210) on behalf of the video source; and
determining if the requests can be handled by the video source, and if so, translating the request into a protocol supported by the intended video source, where necessary, including sending the request to the intended video source and translating the reply into the normalized protocol for the video client, and if said translating is not determined to be necessary, implementing the request within the proxy video server including at least device discovery and motion detection.

## Patentansprüche

1. Proxy-Videoserver (210) zum Verwalten von Videoüberwachungsdaten in einem Netz, das eine oder mehrere Videoquellen (230, 240, 250, 260) und einen oder mehrere Video-Clients (290) umfasst, wobei der Proxy-Videoserver umfasst:
einen Proxy-Videoquellenverwalter (213) zum Verwalten der Videoquellen (230, 240, 250, 260), damit diese als virtuelle Smart-Videoquellen für die Video-Clients (290) erscheinen;
eine Video-Client-Schnittstelle (255) zum Empfangen und Interpretieren von Anforderungen von Video-Clients (290) und Senden von Antworten zu den Video-Clients (290) im Auftrag der Videoquellen (230, 240, 250, 260);
**dadurch gekennzeichnet, dass** er ferner umfasst
eine Videoanalytikfunktion (217) zum Bereitstellen einer Videoanalytik, die wie erforderlich mindestens eine Einrichtungserkennung und eine Bewegungsdetektion aufweist, zum Präsentieren von Smart-Kamera-Ressourcen für jede Videoquelle gegenüber einem beliebigen Video-Client;
und eine oder mehrere Videoquellen-Schnittstellen (215) zum Senden von Anforderungen zu einer Videoquelle unter Verwendung eines Protokolls, das für die Videoquelle spezifisch ist, und zum Empfangen und Interpretieren von Antworten aus einer Videoquelle unter Verwendung eines Protokolls, das für die Videoquelle spezifisch ist.

2. Proxy-Videoserver nach Anspruch 1, wobei der Proxy-Videoquellenverwalter (213) eine Videoquellen-Erkennungsfunktion (214) aufweist, um den Proxy-Videoserver (210) in die Lage zu versetzen, Videoquellen (230, 240, 250, 260) zu erkennen, für die der Proxy-Videoserver als deren Proxy arbeitet.

3. Proxy-Videoserver nach Anspruch 2, wobei die Videoquellen-Erkennungsfunktion (214) ferner die Video-Clients (290) in die Lage versetzt, Videoquellen (230, 240, 250, 260) zu erkennen, für die der Proxy-Videoserver als deren Proxy arbeitet.

4. Proxy-Videoserver nach einem der vorhergehenden Ansprüche, der ferner eine Transkodierungsfunktion (216) zum Bereitstellen von Transkodierungsfunktionen für einen oder mehrere der Video-Clients umfasst.

5. Proxy-Videoserver nach einem der vorhergehenden Ansprüche, wobei die Videoanalytikfunktion (217) einen Satz von benutzerkonfigurierbaren Videoanalytikregeln (218) aufweist und implementiert.

6. Proxy-Videoserver nach einem der vorhergehenden Ansprüche, der ferner eine Aufzeichnungsverwaltungsfunktion (221) umfasst.

7. Proxy-Videoserver nach einem der vorhergehenden Ansprüche, der ferner eine oder mehrere netzgebundene Speicherungsvorrichtungen zum Speichern von Videodaten umfasst.

8. Proxy-Videoserver nach einem der vorhergehenden Ansprüche, der ferner eine Suchfunktion (223) zum Suchen von gespeichertem Video und/oder gespeicherten Metadaten für einen Video-Client im Auftrag einer Videoquelle umfasst.

9. Proxy-Videoserver nach einem der vorhergehenden Ansprüche, der ferner eine Videozugangsrechtefunktion (224) umfasst, die einen Satz von Videozugangsrechten zum Steuern eines Zugangs zu Daten aus Videoquellen aufweist.

10. Proxy-Videoserver nach einem der vorhergehenden Ansprüche, wobei der Proxy-Videoquellenverwalter (213) ein einheitliches Protokoll für sämtliche Videoquellen unabhängig von den tatsächlichen Ressourcen und Protokollen, die tatsächlich von den Videoquellen unterstützt werden, implementiert.

11. Proxy-Videoserver nach einem der vorhergehenden Ansprüche, der ferner eine Routerfunktion umfasst.

12. Videoüberwachungssystem (200), das umfasst:
eine oder mehrere Videoquellen (230, 240, 250, 260) zum Erfassen von Videoüberwachungsdaten; und
einen oder mehrere Video-Clients (290), die Zugang zu erfassten Videoüberwachungsdaten benötigen können; und **gekennzeichnet durch**:
einen Proxy-Videoserver (210) mit einer On-Board-Analytik (217), die mindestens eine Vorrichtungserkennung und Bewegungsdetektion aufweist, in Kommunikation mit der einen oder den mehreren Videoquellen (230, 240, 250, 260) und einem oder mehreren Video-Clients (290) zum Verwalten von Kommunikationen und Austausch der Videoüberwachungsdaten, die von den Videoquellen erfasst werden;
wobei das Verwalten das Arbeiten mit einem virtuellen einheitlichen Protokoll, wie es von dem einen oder den mehreren Video-Clients gesehen wird, umfasst.

13. Videoüberwachungssystem nach Anspruch 12, wobei das Verwalten ferner das Verarbeiten zum Analysieren und Filtern der Videoüberwachungsdaten mittels eines Proxy auf der Basis von Videoinhalt, Metadateninhalt, Systemverarbeitungsbandbreite und Systemlastausgleichs-Erfordernissen umfasst.

14. Videoüberwachungssystem nach Anspruch 12 oder Anspruch 13, das ferner einen zweiten Proxy-Videoserver aufweist, der als sekundärer oder Slave-Proxy-Videoserver für den primären Proxy-Videoserver fungiert.

15. Videoüberwachungssystem nach einem der Ansprüche 12 bis 14, wobei das Verwalten das Bereitstellen von Transkodierungsfunktionen umfasst.

16. Verfahren zum Verwalten von Videoüberwachungsdaten in einem Videoüberwachungsnetz (200), das eine Normalisierungsfunktionalität einer Videoquelle (230, 240, 250, 260) umfasst, wie es für einen oder mehrere Video-Clients (290), die auf die Videoquelle zugreifen, ersichtlich ist, das die folgenden Schritte umfasst:
Antworten auf jede Anfrage, die von einem Video-Client (290) an die Videoquelle (230, 240, 250, 260) gerichtet wird und von dem Proxy-Videoserver (210) empfangen wird, im Auftrag der Videoquelle; und
Bestimmen, ob die Anforderungen von der Videoquelle gehandhabt werden können, und wenn ja, Umsetzen der Anforderung in ein Protokoll, das von der vorgesehenen Videoquelle unterstützt wird, falls erforderlich, einschließlich Senden der Anforderung zu der vorgesehenen Videoquelle und Umsetzen der Rückmeldung in das normalisierte Protokoll für den Video-Client, und wenn nicht bestimmt wird, dass das Umsetzen erforderlich ist, Implementieren der Anforderung in dem Proxy-Videoserver, einschließlich zumindest einer Vorrichtungserkennung und Bewegungsdetektion.

17. Verfahren nach Anspruch 16, das ferner die folgenden Schritte umfasst:
Bestimmen von Ressourcen und unterstützten Protokollen der Videoquelle (230, 240, 250, 260);
Konfigurieren der Vorrichtungserkennungsfunktion des Proxy-Videoservers zum Ankündigen der Videoquelle an der Netzadresse des Proxy-Videoservers; und
Antworten auf Vorrichtungserkennungsanforderungen von einem Video-Client für die Videoquelle.

18. Verfahren nach Anspruch 16 oder Anspruch 17, das ferner mindestens eines umfasst von: Speichern und Empfangen von Videodaten und Metadaten aus der Videoquelle in einer lokalen Speicherungseinrichtung oder NAS, wie erforderlich.

19. Verfahren nach Anspruch 18, wobei sowohl das Speichern als auch das Empfangen das Verarbeiten der Antwort wie erforderlich umfasst, um die Anforderung zu erfüllen, einschließlich Anreichern der Antwort durch weiteres Verarbeiten, wie z. B. Videoanalytik oder Transkodierung.

20. Computerprogrammprodukt, das umfasst:
ein gegenständliches Speicherungsmedium, das für eine Verarbeitungsschaltung lesbar ist und Anweisungen speichert zur Ausführung durch die Verarbeitungsschaltung zum Durchführen eines Verfahrens zum Verwalten von Videoüberwachungsdaten in einem Videoüberwachungsnetz, das eine Normalisierungsfunktionalität einer Videoquelle (230, 240, 250, 260) umfasst, wie für einen oder mehrere Video-Clients (290), die auf die Videoquelle zugreifen, ersichtlich ist, das die folgenden Schritte umfasst:
Antworten auf jede Anforderung, die von einem Video-Client (290) an die Videoquelle gerichtet wird und von dem Proxy-Videoserver (210) empfangen wird, im Auftrag der Videoquelle; und
Bestimmen, ob die Anforderungen von der Videoquelle gehandhabt werden können, und wenn ja, Umsetzen der Anforderung in ein Protokoll, das von der vorgesehenen Videoquelle unterstützt wird, falls erforderlich, einschließlich Senden der Anforderung zu der vorgesehenen Videoquelle und Umsetzen der Rückmeldung in das normalisierte Protokoll für den Video-Client, und wenn nicht bestimmt wird, dass das Umsetzen erforderlich ist, Implementieren der Anforderung in dem Proxy-Videoserver, einschließlich zumindest einer Vorrichtungserkennung und Bewegungsdetektion.

## Revendications

1. Serveur vidéo mandataire (210) pour gérer des données de vidéosurveillance dans un réseau comprenant une ou plusieurs sources vidéo (230, 240, 250, 260) et un ou plusieurs clients vidéo (290), le serveur vidéo mandataire comprenant :
un gestionnaire de source vidéo mandataire (213) pour gérer les sources vidéo (230, 240, 250, 260) pour qu'elles apparaissent sous la forme de sources vidéo intelligentes virtuelles aux clients vidéo (290) ;
une interface de client vidéo (255) pour recevoir et interpréter les demandes des clients vidéo (290) et envoyer des réponses aux clients vidéo (290) pour le compte des sources vidéo (230, 240, 250, 260) ;
**caractérisé en ce qu'**il comprend en outre une fonction d'analyse vidéo (217) pour fournir une analyse vidéo incluant au moins la découverte de périphérique et la détection de mouvement, selon les besoins, afin de présenter des capacités de caméra intelligente pour chaque source vidéo à tout client vidéo ;
et une ou plusieurs interfaces de source vidéo (215) pour envoyer des demandes à une source vidéo au moyen d'un protocole spécifique à la source vidéo et pour recevoir et interpréter les réponses provenant d'une source vidéo au moyen d'un protocole spécifique à la source vidéo.

2. Serveur vidéo mandataire tel qu'énoncé dans la revendication 1, dans lequel ledit gestionnaire de source vidéo mandataire (213) inclut une fonction de découverte de source vidéo (214) pour permettre au serveur vidéo mandataire (210) de découvrir des sources vidéo (230, 240, 250, 260) pour lesquelles le serveur vidéo mandataire fonctionnera comme leur mandataire.

3. Serveur vidéo mandataire tel qu'énoncé dans la revendication 2, dans lequel la fonction de découverte de source vidéo (214) permet en outre aux clients vidéo (290) de découvrir des sources vidéo (230, 240, 250, 260) pour lesquelles le serveur vidéo mandataire fonctionnera comme leur mandataire.

4. Serveur vidéo mandataire tel qu'énoncé dans l'une quelconque des revendications précédentes, comprenant en outre une fonction de transcodage (216) pour fournir des fonctions de transcodage à un ou plusieurs des clients vidéo.

5. Serveur vidéo mandataire tel qu'énoncé dans l'une quelconque des revendications précédentes, dans lequel la fonction d'analyse vidéo (217) inclut et implémente un ensemble de règles d'analyse vidéo configurables par l'utilisateur (218).

6. Serveur vidéo mandataire tel qu'énoncé dans l'une quelconque des revendications précédentes, comprenant en outre une fonction de gestion d'enregistrement (221).

7. Serveur vidéo mandataire, tel qu'énoncé dans l'une quelconque des revendications précédentes, comprenant en outre un ou plusieurs périphériques de stockage rattachés au réseau pour stocker des données vidéo.

8. Serveur vidéo mandataire tel qu'énoncé dans l'une quelconque des revendications précédentes, comprenant en outre une fonction de recherche (223) pour rechercher une vidéo stockée, et/ou des métadonnées stockées pour un client vidéo pour le compte d'une source vidéo.

9. Serveur vidéo mandataire, tel qu'énoncé dans l'une quelconque des revendications précédentes, comprenant en outre une fonction de droits d'accès vidéo (224), comprenant un ensemble de droits d'accès vidéo pour contrôler l'accès aux données à partir de sources vidéo.

10. Serveur vidéo mandataire tel qu'énoncé dans l'une quelconque des revendications précédentes, dans lequel le gestionnaire de source vidéo mandataire (213) implémente un protocole uniforme pour toutes les sources vidéo indépendamment des capacités réelles et des protocoles réellement pris en charge par lesdites sources vidéo.

11. Serveur vidéo mandataire tel qu'énoncé dans l'une quelconque des revendications précédentes, comprenant en outre une fonction de routeur.

12. Système de vidéosurveillance (200), comprenant :
une ou plusieurs sources vidéo (230, 240, 250, 260) pour acquérir des données de vidéosurveillance ; et
un ou plusieurs clients vidéo (290) qui peuvent avoir besoin d'accéder aux données de vidéosurveillance acquises ; et **caractérisé par**
un serveur vidéo mandataire (210) avec analyse vidéo embarquée (217) incluant au moins la découverte de périphérique et la détection de mouvement en communication avec une ou plusieurs sources vidéo (230, 240, 250, 260), et un ou plusieurs clients vidéo (290) pour gérer les communications et les échanges des données de vidéosurveillance acquises par les sources vidéo ;
où ladite gestion comprend d'opérer avec un protocole uniforme virtuel tel qu'il est vu par un ou plusieurs clients vidéo.

13. Système de vidéosurveillance tel qu'énoncé dans la revendication 12, dans lequel ladite gestion comprend en outre un traitement pour analyser et filtrer les données de vidéosurveillance par mandataire sur la base du contenu vidéo, du contenu des métadonnées, de la bande passante de traitement du système et des besoins en termes d'équilibrage de charge du système.

14. Système de vidéosurveillance tel qu'énoncé dans la revendication 12 ou la revendication 13, comprenant en outre un second serveur vidéo mandataire, qui agit comme serveur vidéo mandataire secondaire ou esclave par rapport au serveur vidéo mandataire primaire.

15. Système de vidéosurveillance tel qu'énoncé dans l'une quelconque des revendications 12 à 14, dans lequel ladite gestion comprend de fournir des fonctions de transcodage.

16. Procédé de gestion de données de vidéosurveillance à l'intérieur d'un réseau de vidéosurveillance (200) comprenant une fonctionnalité de normalisation d'une source vidéo (230, 240, 250, 260), telle qu'apparente pour un ou plusieurs clients vidéo (290) accédant à ladite source vidéo, et comprenant les étapes suivantes :
répondre à chaque demande adressée par un client vidéo (290) à la source vidéo (230, 240, 250, 260) et reçue par le serveur vidéo mandataire (210) pour le compte de la source vidéo ; et
déterminer si les demandes peuvent être prises en charge par la source vidéo et, si tel est le cas, traduire la demande en un protocole supporté par la source vidéo prévue, là où cela est nécessaire, y compris envoyer la demande à la source vidéo prévue et traduire la réponse en le protocole normalisé pour le client vidéo et, si ladite traduction n'est pas déterminée comme étant nécessaire, mettre en oeuvre la demande dans le serveur vidéo mandataire incluant au moins la découverte du périphérique et la détection de mouvement.

17. Procédé tel qu'énoncé dans la revendication 16, comprenant en outre les étapes suivantes :
déterminer les capacités et les protocoles supportés par la source vidéo (230, 240, 250, 260) ;
configurer la fonction de découverte de périphérique du serveur vidéo mandataire pour annoncer la source vidéo à l'adresse réseau du serveur vidéo mandataire ; et répondre aux demandes de découverte de périphérique provenant d'un client vidéo pour la source vidéo.

18. Procédé tel qu'énoncé dans la revendication 16 ou la revendication 17, comprenant en outre au moins l'une des étapes suivantes : stocker et recevoir des données vidéo et des métadonnées depuis la source vidéo vers un stockage local ou un NAS selon les besoins.

19. Procédé tel qu'énoncé dans la revendication 18, dans lequel le stockage et la réception comprennent tous deux de traiter les réponses comme cela est nécessaire pour répondre à la demande, y compris augmenter la réponse avec un traitement supplémentaire, tel que l'analyse vidéo ou le transcodage.

20. Produit programme informatique, comprenant :
un support de stockage tangible lisible par un circuit de traitement et stockant des instructions destinées à une exécution par le circuit de traitement pour exécuter un procédé de gestion de données de vidéosurveillance dans un réseau de vidéosurveillance comprenant une fonctionnalité de normalisation d'une source vidéo (230, 240, 250, 260), telle qu'apparente pour un ou plusieurs clients vidéo (290) accédant à ladite source vidéo, comprenant les étapes suivantes :
répondre à chaque demande adressée par un client vidéo (290) à la source vidéo et reçue par le serveur vidéo mandataire (210) pour le compte de la source vidéo ; et
déterminer si les demandes peuvent être prises en charge par la source vidéo et, si tel est le cas, traduire la demande en un protocole supporté par la source vidéo prévue, là où cela est nécessaire, y compris envoyer la demande à la source vidéo prévue et traduire la réponse en le protocole normalisé pour le client vidéo et, si ladite traduction n'est pas déterminée comme étant nécessaire, mettre en oeuvre la demande dans le serveur vidéo mandataire incluant au moins la découverte du périphérique et la détection de mouvement.
